# EUROPÄISCHE PATENTSCHRIFT

(11) **EP 3 356 202 B1**
(45) Veröffentlichungstag und Bekanntmachung des Hinweises auf die Patenterteilung: **18.12.2019**
(21) Anmeldenummer: 16774636.1
(22) Anmeldetag: 21.09.2016
(51) Int. Cl.: B62D 1/19, B62D 1/187

(54) **ENERGIEABSORPTIONSELEMENT FÜR EINE LENKSÄULE EINES KRAFTFAHRZEUGS UND LENKSÄULE FÜR EIN KRAFTFAHRZEUG**
ENERGY ABSORPTION ELEMENT FOR A VEHICLE STEERING COLUMN AND STEERING COLUMN FOR A VEHICLE
ÉLÉMENT D'ABSORPTION D'ÉNERGIE POUR UNE COLONNE DE DIRECTION DE VÉHICULE ET COLONNE DE DIRECTION POUR VÉHICULE

(30) Priorität: 02.10.2015 DE 102015219086
(43) Veröffentlichungstag der Anmeldung: 08.08.2018
(73) Patentinhaber: ThyssenKrupp Presta AG, 9492 Eschen (LI); thyssenkrupp AG, 45143 Essen (DE)
(72) Erfinder: KURZ, Hannes, 6800 Feldkirch (AT); ADELMANN, Werner, 9469 Haag (CH); NICOLUSSI, Matthias, 6800 Feldkirch (AT)
(74) Vertreter: thyssenkrupp Intellectual Property GmbH
(86) Internationale Anmeldenummer: PCT/EP2016/072417
(87) Internationale Veröffentlichungsnummer: WO 2017/055155

(56) Entgegenhaltungen:
- US-A1- 2006 214 411

## Beschreibung

### Stand der Technik

Die Erfindung betrifft ein Energieabsorptionselement für eine Lenksäule eines Kraftfahrzeugs, umfassend mindestens ein Deformationselement, ein erstes Befestigungselement und ein zweites Befestigungselement, wobei das Deformationselement mit dem ersten Befestigungselement und dem zweiten Befestigungselement verbunden ist und bezüglich einer auf das eine Befestigungselement relativ zu dem anderen Befestigungselement ausübbaren Kraft im Kraftfluss angeordnet ist, wobei mindestens ein Sollbruchelement parallel im Kraftfluss zum Deformationselement mit dem ersten und dem zweiten Befestigungselement verbunden ist. Eine Lenksäule mit einem derartigen Energieabsorptionselement ist ebenfalls Gegenstand der Erfindung.

Es sind Lenksäulen bekannt, welche zur Erhöhung der Insassensicherheit bei einem Fahrzeugzusammenstoß, einem sogenannten Crashfall, eine sogenannte Crasheinrichtung oder ein Crashsystem aufweisen. Eine derartige Crasheinrichtung sieht vor, dass die Stelleinheit, an der fahrerseitig das Lenkrad angebracht ist, relativ zur karosseriefesten Trageinheit der Lenksäule in Längsrichtung, d.h. in Fahrtrichtung nach vorn verschiebbar ist. Wenn der Körper des Fahrers bei einem Frontalzusammenstoß mit hoher Geschwindigkeit auf das Lenkrad aufprallt, wird eine relativ große Kraft in Längsrichtung auf das Lenkrad ausgeübt, die einen Grenzwert überschreitet, der nur im Crashfall auftritt. Um dabei die Verletzungsgefahr durch eine kontrollierte, möglichst gleichmäßige Abbremsung des auf das Lenkrad auftreffenden Körpers zu reduzieren, ist es bekannt, zwischen der Trageinheit und der Stelleinheit eine Energieabsorptionseinrichtung einzukoppeln. Diese weist ein Energieabsorptionselement auf, welches über erste und zweite Befestigungselemente zum einen an einem karosseriefesten Bauteil einer Trageinrichtung, beispielsweise einer Konsoleneinheit oder einer an der Konsoleneinheit gehaltenen Halteklammer, und zum anderen an einem zusammen mit dem Lenkrad relativ zur Karosserie im Crashfall verschiebbaren Bauteil, beispielsweise der Stelleinheit, einer Manteleinheit oder dergleichen, befestigt ist. Die Befestigungselemente sind über mindestens ein Deformationselement miteinander verbunden, welches sich bei einer Relativbewegung der Befestigungselemente im Kraftfluss zwischen den Befestigungselementen befindet. Dadurch wird im Crashfall die eingeleitete Energie über den Verschiebeweg der Relativbewegung in eine definierte plastische Verformung des Deformationselements umgesetzt, so dass eine kontrollierte, vergleichmäßigte Abbremsung erfolgt.

Im Stand der Technik ist eine Energieabsorptionsvorrichtung für eine Lenksäule in der DE 10 2013 104 958 B3 beschrieben, die als gattungsbildend zugrunde gelegt wird. Als Deformationselement ist dabei eine Biegelasche vorgesehen, welche im Crashfall über den Verschiebeweg zwischen der Manteleinheit einer Stelleinheit und einer Halteeinheit fortlaufend umgebogen wird und somit durch kontinuierliche Energieabsorption bei der Verformung der Biegelasche für eine vergleichmäßigte Abbremsung sorgt. Aus der DE 1 962 183 ist zur Energieabsorption eine Energieabsorptionsvorrichtung mit einem Deformationselement bekannt, welches als Biegereißlasche ausgebildet ist. Dabei handelt es sich im Prinzip um eine Biegelasche, die beim Verbiegen zusätzlich von einem Träger entlang einer definierten Risslinie abgetrennt wird, wodurch zusätzlich Energie absorbiert wird. Die Biegereißlasche wird ebenfalls bei einer Relativbewegung von Manteleinheit und Halteeinheit über den Verschiebeweg fortlaufend umgebogen.

Vorteilhaft an den bekannten Energieabsorptionseinrichtungen ist die über den Verschiebeweg gleichmäßige Energieaufnahme durch das Deformationselement. Nachteilig ist jedoch, dass außerhalb des Crashfalls, beispielsweise durch missbräuchliche Gewalteinwirkung auf das Lenkrad oder versehentliche zu hohe Kraftanwendung beim Verstellen der Lenksäule das Deformationselement bereits verformt werden kann, was die Wirksamkeit der Crasheinrichtung im Crashfall beeinträchtigen kann. Um dies zu verhindern ist zwar beispielsweise in der DE 196 37 176 A1 bereits vorgeschlagen worden, zusätzlich zum Reibschluss zwischen der Karosserie und den relativ dazu verschiebbaren Bauteilen der Lenksäule eine Kapsel mit Abreißstiften einzusetzen, die nur im Crashfall abreißen und erst dann den Kraftfluss über das Deformationselement freigeben. Nachteilig ist an der bekannten Anordnung jedoch, dass nicht nur das Energieabsorptionselement bereitgestellt und mit seinen Befestigungselementen montiert werden muss, sondern zusätzlich die Kapsel und die Abreißstifte gefertigt, bereitgestellt und montiert werden müssen. Dadurch entsteht ein höherer Fertigungs-, Montage- und Kostenaufwand als bei der bloßen Verwendung eines gattungsgemäßen Energieabsorptionselements.

Aus der US 2006/214411 A1 ist ein Energieabsorptionselement der eingangs genannten Art bekannt. Dabei ist ein separates Sollbruchelement parallel zum Deformationselement montiert. Durch den mehrteiligen Aufbau entsteht ein relativ hoher Fertigungs- und Montageaufwand.

Angesichts der vorangehend erläuterten Problematik ist es eine Aufgabe der vorliegenden Erfindung, ein Energieabsorptionselement der eingangs genannten Art zur Verfügung zu stellen, welches einen geringen Fertigungs- und Montageaufwand erfordert. Weiters soll mit der Erfindung eine verbesserte Lenksäule für ein Kraftfahrzeug bereitgestellt werden.

### Darstellung der Erfindung

Gelöst wird die Aufgabe der Erfindung durch ein Energieabsorptionselement mit den Merkmalen des Patentanspruchs 1 sowie durch eine Kraftfahrzeuglenksäule mit den Merkmalen des Patentanspruchs 9. In den Unteransprüchen sind vorteilhafte Weiterbildungen der Erfindung dargestellt.

Zur Lösung der vorgenannten Problematik wird erfindungsgemäß vorgeschlagen, dass das Energieabsorptionselement als einstückiges Formteil ausgebildet ist, wobei das Sollbruchelement ein integraler Bestandteil des Energieabsorptionselements ist.

Gegenüber dem Stand der Technik hat die Erfindung den besonderen Vorteil, dass das Deformationselement und das Sollbruchelement in dem Energieabsorptionselement zu einem integralen Bauteil zusammengefasst sind, welches mit seinen zwei Befestigungselementen an den in Crashfall gegeneinander verschiebbaren Bauteilen angebracht werden kann. Dadurch ist die Montage so einfach wie bei den im Stand der Technik bekannten Energieabsorptionselementen mit lediglich einem Deformationselement, das Sicherheitsniveau ist dabei jedoch höher, nämlich so hoch wie bei Anordnungen mit separat montierten Sollbruchelementen. Dadurch wird der Herstellungs- und Montageaufwand verringert und zugleich die Funktionalität verbessert.

Das Energieabsorptionselement weist wie an sich bekannt ein Deformationselement auf, welches so angeordnet ist, dass es sich im Kraftfluss zwischen den Befestigungselementen befindet. Erfindungsgemäß ist zusätzlich ebenfalls zwischen den Befestigungselementen ein Sollbruchelement angeordnet, welches ein Losbrechelement bildet. Im Gegensatz zum Deformationselement, welches sich bei Krafteinwirkung kontinuierlich über einen vorgegebenen Weg und damit über eine Zeitdauer fortlaufend verformt und am Ende seiner Verformung immer noch die Befestigungselemente miteinander verbindet, wird das Sollbruchelement beim Überschreiten eines Grenzwerts der einwirkenden Kraft, der der durch die Bruchkraft des Sollbruchelements gegebenen Grenzkraft, schlagartig durchtrennt, so dass die Befestigungselemente nicht mehr durch das Sollbruchelement miteinander verbunden sind. Die Trennung durch Abriss oder Brechen des Sollbruchelements erfolgt beim Überschreiten der Grenzkraft nahezu diskontinuierlich, d.h. zeitlich abrupt ohne wesentliche vorherige Dehnung.

Bei der Erfindung sind das Deformationselement und das Sollbruchelement im Kraftfluss parallel zwischen den Befestigungselementen eingesetzt. Dadurch bewirkt eine auf die Befestigungselemente einwirkende Kraft erst dann eine Aktivierung des Energieabsorptionselements, wenn die Grenzkraft überschritten wird. Dann wird zuerst das Sollbruchelement durchtrennt und anschließend die Krafteinwirkung auf das Deformationselement freigegeben. Unterhalb des Schwellenwerts der Kraft, welche durch die Grenzkraft des Sollbruchelements vorgegeben wird, werden die Befestigungselemente durch das Sollbruchelement relativ zueinander in Position gehalten, so dass das Deformationselement nicht deformiert werden kann. Dadurch ist sichergestellt, dass bei versehentlichen oder missbräuchlichen Belastungen des Lenkrads, die praktisch immer unterhalb der im Crashfall auftretenden Kraft liegen, das Deformationselement unversehrt bleibt.

Eine vorteilhafte Ausführung der Erfindung sieht vor, dass das Sollbruchelement eine Sollbruchstelle mit im Vergleich zum übrigen Verlauf zwischen den Befestigungselementen verringerter Bruch- oder Reißwiderstandsfähigkeit aufweist. Das Sollbruchelement erstreckt sich mit seinem Verlauf erfindungsgemäß zwischen dem ersten und zweiten Befestigungselement. Seine maßgebliche Eigenschaft, beim Überschreiten eines Schwellenwerts der an den Befestigungselementen anliegenden Kraft, der Grenzkraft, kann es durch eine Sollbruchstelle erhalten, welche an der geplanten Trennstelle eine gezielt eingebrachte Schwachstelle mit definierter Bruch- bzw. Reißwiderstandsfähigkeit darstellt. Praktisch kann die Sollbruchstelle realisiert werden durch einen Abschnitt mit im Vergleich zum sonstigen Verlauf des Sollbruchelements verringertem Materialquerschnitt, beispielsweise durch eine Einformung oder Einschnürung, so dass in diesem Bereich im Verhältnis zu anderen Bereichen ausserhalb der Sollbruchstelle erhöhte Spannungen vorherrschen wenn eine Kraft eingetragen wird, so dass die durch das Material ertragbaren Festigkeiten, beispielsweise der Zugfestigkeit, überschritten wird und somit ein Materialversagen im Bereich der Sollbruchstelle eintritt. Alternativ oder zusätzlich kann die Sollbruchstelle durch einen Abschnitt mit verringerter Materialfestigkeit realisiert werden, der beispielsweise in einem aus Metall wie etwa Stahl oder dergleichen bestehenden Sollbruchelement durch lokale thermische Behandlung erzeugt werden kann, wodurch Bruch- und Reißeigenschaften gezielt eingestellt werden können. Darüber hinaus ist es denkbar, in das Sollbruchelement einen Abschnitt aus einem anderen Material einzufügen, beispielsweise in ein aus Metall gefertigtes Sollbruchelement im Bereich der Sollbruchstelle einen Abschnitt aus einem Kunststoffmaterial.

Die Grenzkraft, bei deren Überschreiten das Sollbruchelement getrennt wird, kann unabhängig von der Kraft eingestellt werden, bei der eine Verformung des Deformationselements einsetzt. Um einen gleichmäßigen Verlauf der Energieabsorption zu erreichen, kann die Grenzkraft durch eine geeignete Gestaltung der Sollbruchstelle vorgegeben werden, dass sie in etwa der Auslösekraft des Deformationselements entspricht, wobei es vorteilhaft ist, dass die Grenzkraft geringfügig größer ist als die Auslösekraft. Dadurch wird sichergestellt, dass das Deformationselement tatsächlich erst nach dem Trennen des Sollbruchelements verformt wird

Bei der Erfindung kann realisiert sein, dass das erste und zweite Befestigungselement in einer Längsrichtung mit Abstand zueinander angeordnet sind, wobei das Deformationselement und das Sollbruchelement bezüglich dieser Längsrichtung zwischen dem ersten und zweiten Befestigungselement angeordnet sind. Die Längsrichtung kann die Längsrichtung der Lenksäule sein, welche durch die Längsachse der Lenkspindel gegeben ist. In dieser Längsrichtung wirkt im Crashfall die Kraft über die Befestigungselemente auf die Energieabsorptionsvorrichtung ein, d.h. der Kraftfluss verläuft in Längsrichtung. Das Deformationselement erstreckt sich von dem ersten zu dem zweiten Befestigungselement. Erfindungsgemäß verbindet das Sollbruchelement ebenfalls das erste mit dem zweiten Befestigungselement in Längsrichtung. Dadurch wird die erfindungsgemäß parallele Anordnung realisiert. Vorteilhaft ist daran, dass das Deformationselement und das Sollbruchelement in einer kompakten Baueinheit realisiert werden können, welche insgesamt nur zwei Befestigungselemente zur Verbindung mit der Lenksäule bzw. der Fahrzeugkarosserie aufweist. Diese Anordnung kommt einer vereinfachten Montage zugute.

Die Befestigungselemente können beispielsweise als Laschen ausgebildet sein, und können zur Verbindung mit den gegeneinander verschieblichen Bauteilen von Lenksäule und Karosserie Befestigungsmittel wie Befestigungsöffnungen oder -vorsprünge, formschlüssige oder sonstige Halteelemente aufweisen. Entsprechend kann die Montage der Energieabsorptionsvorrichtung an korrespondierenden Aufnahmen an der Lenksäule bzw. an karosseriefesten Bauteilen mittels Schrauben, Nieten oder Klemmen, oder durch formschlüssiges Einfügen erfolgen.

Das Deformationselement ist über einen vorgegebenen Deformationsweg kontinuierlich fortschreitend verformbar und absorbiert dabei kinetische Energie, die es in Verformungsarbeit umsetzt. Der Deformationsweg entspricht der Relativbewegung zwischen dem ersten und dem zweitem Befestigungselement, wobei diese Relativbewegung erst dann möglich ist, wenn das Sollbruchelement im Crashfall durchtrennt ist.

Das Deformationselement kann ein Biegeelement, beispielsweise zumindest einen Biegedraht, und/oder eine Reißlasche und/oder eine Biege-Reißlasche aufweisen. Dabei handelt es sich um an sich bekannte, erprobte und funktionssichere energieabsorbierende Anordnungen, die im Stand der Technik als separate Energieabsorptionselemente eingesetzt werden. Dank der erfindungsgemäßen Integration mit einem Sollbruchelement wird die Betriebssicherheit und Funktionalität dieser zuverlässigen Bauelemente nochmals erhöht. Alternativ oder zusätzlich ist es denkbar und möglich, andere im Stand der Technik bekannte Energieabsorptionselemente als Deformationselemente in der erfindungsgemäßen Kombination einzusetzen, beispielsweise Trenn- und/oder Umformeinrichtungen, die im Crashfall eingeleitete Energie in plastische Verformung umsetzen.

In einer vorteilhaften Ausführung der Erfindung weist das Energieabsorptionselement einen Grundkörper auf, der an dem ersten Befestigungselement angebracht ist, und einen an dem Grundkörper ausgebildeten Biegestreifen, der mit dem zweiten Befestigungselement verbunden ist. Der Biegestreifen kann als Reißlasche ausgebildet sein, die mit dem Grundkörper über mindestens eine Soll-Reißlinie verbunden ist, die beispielsweise durch eine linienförmige Einkerbung in dem Grundkörper gebildet wird, entlang der die Reißwiderstandsfähigkeit gezielt verringert ist. Im Crashfall werden die Befestigungselemente relativ zueinander bewegt, wobei der Biegestreifen fortlaufend entlang der Soll-Reißlinie von dem Grundkörper abgetrennt wird, wodurch Energie absorbiert wird. Damit einhergehend wird der Biegestreifen fortlaufend in sich umgebogen, wodurch ebenfalls Energie in plastische Verformung umgesetzt wird. Dadurch wird eine hohe Effektivität bei kleinen Abmessungen erreicht. Der zusätzliche Vorteil durch die Erfindung ist, dass durch die Gestaltung des Sollbruchelements eine zuverlässige Aktivierung der Biege-Reißlasche erfolgen kann, ohne dass außerhalb des Crashfalls eine unerwünschte Verformung erfolgt.

Alternativ kann der Biegestreifen als reine Biegelasche ausgebildet sein, die im Unterschied zur vorangehend beschriebenen Ausführung entlang des Verlaufs der Soll-Reißlinien nicht mit dem Grundkörper verbunden ist, so dass sie bei einer Relativbewegung der Befestigungselemente nicht herausgetrennt, sondern lediglich in sich umgebogen wird.

Eine vorteilhafte Weiterbildung der vorgenannten Ausführungsform sieht vor, dass das zweite Befestigungselement an dem Biegestreifen ausgebildet ist und der Biegestreifen über das zweite Befestigungselement hinaus weitergeführt ist als Sollbruchelement bis zum ersten Befestigungselement. Der Biegestreifen kann, wie dies prinzipiell bekannt ist, beispielsweise als Blechstreifen ausgebildet sein. An diesem streifenförmigen Biegeelement kann das zweite Befestigungselement ausgebildet sein, beispielsweise in Form einer Befestigungsöffnung, oder als Abkantung, Umbiegung oder Vorsprung zur Verbindung mit einer korrespondierenden Aufnahme an einem Bauteil der Lenksäule oder der Karosserie. Darüber hinaus kann der Biegestreifen selbst als Sollbruchelement ausgestaltet werden. Hierzu kann der Biegestreifen verlängert werden, und zwar bis zum ersten Befestigungselement. Dabei kann im Verlauf zwischen dem ersten und zweiten Befestigungselement, wo der Biegestreifen das Sollbruchelement bildet, eine Sollbruchstelle ausgebildet sein, wie dies oben beschrieben ist. dadurch ergibt sich die besonders vorteilhafte Möglichkeit, dass das Energieabsorptionselement als einstückiges Formteil ausgebildet ist. Beispielsweise kann eine Biege-Reißlasche wie an sich im Stand der Technik bekannt, als einstückiges Blechformteil ausgebildet sein, wobei die Biegelasche verlängert ausgebildet ist, so dass sie als erfindungsgemäßes Sollbruchelement dient.

Es ist vorteilhaft, dass das Energieabsorptionselement als einstückiges Formteil ausgebildet ist, und zwar insbesondere als Blechformteil, welches aus einem einzigen Blechzuschnitt hergestellt wird. Dieser Blechzuschnitt kann rationell als Stanzteil erzeugt werden, in das die Soll-Reißlinien eingepresst werden, und das abgekantet, gefalzt oder anderweitig plastisch geformt wird. Die Befestigungselemente können ebenfalls an dem Blechzuschnitt ausgebildet werden. Das erfindungsgemäß parallel zum Verformungselement, beispielsweise einer Biege-Reißlasche, ausgebildete Sollbruchelement kann beispielsweise durch eine Einkerbung oder Materialschwächung in dem Blech ausgebildet sein. Die Biege-Reißlasche und das Sollbruchelement können parallel zueinander geschaltet werden, indem eine Verbindung mit den jeweiligen Befestigungselementen mittels geeigneter Fügetechniken erfolgt, beispielsweise dadurch, dass das Sollbruchelement oder das Verformungselement durch Punktschweißung mit einem der Befestigungselemente fest verbunden wird.

Die Erfindung betrifft weiterhin eine Lenksäule für ein Kraftfahrzeug, umfassend eine Trageinheit, die mit einer Karosserie eines Kraftfahrzeugs verbindbar ist, einer Halteeinheit, die eine Stelleinheit mit einer darin drehbar gelagerten Lenkspindel trägt und die in einer Längsrichtung verschiebbar von der Trageinheit gehalten wird, wobei ein Energieabsorptionselement ein Deformationselement aufweist, welches mit jeweils einem Befestigungselement mit der Trageinheit und der Halteeinheit verbunden ist, und welches bei einer Relativverschiebung von Trageinheit und Halteeinheit im Crashfall unter Energieaufnahme deformiert wird, wobei das Energieabsorptionselement mindestens ein Sollbruchelement aufweist, welches zwischen den Befestigungselementen befestigt ist. Erfindungsgemäß ist vorgesehen, dass das Energieabsorptionselement als einstückiges Formteil ausgebildet ist.

Das Energieabsorptionselement weist eine Kombination eines Deformationselements und eines Sollbruchelements gemäß der vorangehend beschriebenen Ausführungsformen der Erfindung auf. Im Gegensatz zum Stand der Technik ist dabei das Sollbruchelement ein integraler Bestandteil des Energieabsorptionselements. Dadurch kann die Lenksäule einfacher und kostengünstiger gefertigt und montiert werden. Dabei wird die Zuverlässigkeit und Sicherheit erhöht.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Lenksäule mit einem erfindungsgemäßen Energieabsorptionselement in einer schematischen perspektivischen Ansicht,
- Figur 2: eine Detailansicht der Lenksäule gemäß Figur 1,
- Figur 3: die Lenksäule gemäß Figur 1 in einer weiteren schematischen perspektivischen Ansicht,
- Figur 4: ein erfindungsgemäßes Energieabsorptionselement in einer ersten Ausführungsform in schematischer perspektivischer Ansicht im Ruhezustand,
- Figur 5: das Energieabsorptionselement gemäß Figur 4 in derselben Ansicht im ausgelösten Zustand,
- Figur 6: das Energieabsorptionselement gemäß Figur 4 in einer Ansicht in der Höhenrichtung von oben senkrecht zur Längsachse,
- Figur 7: ein Energieabsorptionselement in einer zweiten Ausführungsform in einer Ansicht wie in Figur 6,
- Figur 8: ein erfindungsgemäßes Energieabsorptionselement in einer dritten Ausführungsform in schematischer perspektivischer Ansicht wie in Figur 4
- Figur 9: ein Ersatzschaltbild des erfindungsgemäßen Energieabsorptionselement im Ruhezustand,
- Figur 10: ein Ersatzschaltbild des erfindungsgemäßen Energieabsorptionselement im ausgelösten Zustand,
- Figur 11: ein Energieabsorptionselement in einer dritten Ausführungsform in einer Ansicht wie in Figur 6, und
- Figur 12: Rohling für das Energieabsorptionselement in der dritten Ausführungsform, dargestellt in einem Fertigungsschritt des Blechformteils vor der Umformoperation zur Darstellung des Energieabsorptionselements in der dritten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

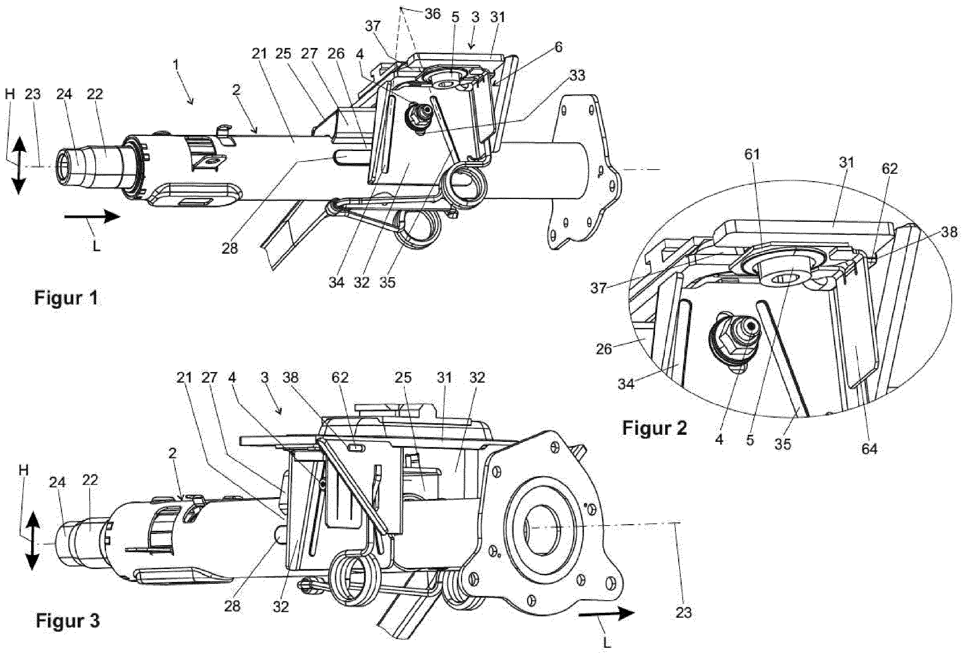

Figuren 1, 2 und 3 zeigen eine Lenksäule 1, und zwar in perspektivischer Ansicht von der Seite schräg nach vorn bezogen auf die Fahrtrichtung (Figur 1), ein vergrößertes Detail dieser Ansicht (Figur 2) sowie eine Ansicht von derselben Seite dieses Mal nach hinten bezogen auf die Fahrtrichtung (Figur 3).

Die Lenksäule 1 weist eine Stelleinheit 2 auf, mit einer Manteleinheit 21, in der eine Lenkspindel 22 um ihre Längsachse 23 drehbar gelagert ist. An einem Befestigungsabschnitt 24 im bezogen auf die Fahrtrichtung hinteren Bereich der Lenkspindel 22 kann ein hier nicht dargestelltes Lenkrad montiert werden.

Zur Befestigung an einer nicht dargestellten Karosserie eines Kraftfahrzeugs weist die Lenksäule 1 eine Halteeinheit 3 auf. Die Halteeinheit 3 weist ein Halteteil 31 auf, von dem sich zwei Seitenwangen 32 erstrecken.

Die Manteleinheit 21 der Stelleinheit 2 ist zwischen den Seitenwangen 32 aufgenommen. Eine Spannachse 4 erstreckt sich durch eine Öffnung quer zur Längsachse 23 in einem an der Manteleinheit 21 angebrachten kastenförmigen Trägerelement 25 und durchsetzt die beiden Seitenwangen 32 in Langlöchern 33, die sich in Höhenrichtung H quer zur Längsachse 23 und quer zur Spannachse 4 erstrecken. Die Spannachse 4 ist mit einer aus dem Stand der Technik an sich bekannten Spanneinrichtung gekoppelt, beispielsweise einer Nocken-Spanneinrichtung, einer Kippstift-Spanneinrichtung oder dergleichen, die sich außen auf einer der Seitenwangen 32 abstützt. Die Spanneinrichtung kann in eine Feststellposition gebracht werden, in der durch die Spannachse 4 von außen eine Spannkraft auf die Seitenwangen 32 ausgeübt wird, wodurch diese durch die Spannachse 4 gegeneinander zusammengezogen und reibschlüssig mit den Seitenflächen 26 der Manteleinheit 21 verspannt werden. Dadurch ist die Manteleinheit 21 und mit dieser die Stelleinheit 2 im normalen Fahrbetrieb relativ zur Fahrzeug-Karosserie fixiert. Wird die Spanneinrichtung in Löseposition gebracht, wird die über die Seitenwangen 32 auf die Seitenflächen 26 aufgebrachte Klemm- bzw. Spannkraft aufgehoben und damit der Reibschluss gelöst. Dadurch kann die Stelleinheit 2 in den Langlöchern 33 in den Seitenwangen 32 in Höhenrichtung H relativ zur Halteeinheit 3 verstellt werden, so dass eine Höhenverstellung des Lenkrads vorgenommen werden kann, wie dies in der Zeichnung mit dem Doppelpfeil angedeutet ist.

Auf den Seitenflächen 26 der Stelleinheit 2 sind jeweils seitlich, d.h. von innen gegen die Seitenwangen 32 vorstehende, rippenartige Vorsprünge 27 und 28 angeordnet, wobei der Vorsprung 27 an dem Trägerelement 25 angeordnet ist und der Vorsprung 28 an der Manteleinheit 21, im gezeigten Beispiel etwa in Höhe der Längsachse 23. Die Vorsprünge 27 und 28 sind paarweise mit Abstand im Wesentlichen parallel zueinander angeordnet und erstrecken sich im Wesentlichen parallel zur Längsachse 23. Auf ihren Innenseiten, die besagten Seitenflächen 26 zugewandt sind, weisen die Seitenwangen 32 ebenfalls Vorsprünge auf, die im dargestellten Beispiel durch Sicken 34 und 35 gebildet werden, welche bezüglich der Manteleinheit 21 von außen in die bevorzugt aus Stahlblech bestehenden Seitenwangen 32 eingeformt sind, beispielsweise durch Einpressen. Die Sicken erstrecken sich quer zur Längsachse 23 und damit quer zu besagten Vorsprüngen 27 und 28 in Höhenrichtung H. Dabei sind sie in dem dargestellten Beispiel nicht parallel, sondern wie in den Figuren erkennbar winklig zueinander angeordnet, so dass sich in einer gedachten Verlängerung in einem Schnittpunkt 36 oberhalb der Halteeinheit 3 schneiden würden, wie dies schematisch mit den gestrichelten Linien angedeutet ist.

In Feststellposition der Spanneinrichtung haben die durch die Sicken 34 und 35 ausgebildeten Vorsprünge auf den Innenseiten der Seitenwangen 32 Kontakt mit den Vorsprüngen 27 und 28 an den Seitenflächen 26, so dass eine Vierpunktauflage gebildet wird. Durch die parallelen Vorsprünge 27 und 28 sowie die winklig zueinander verlaufenden Sicken 34 und 35 wird ein vierpunktartiger Klemmkontakt realisiert, bei dem die vier Klemmpunkte, in denen jeweils einer der Vorsprünge 27 oder 28 eine der Sicken 34 oder 35 kontaktiert, die Eckpunkte eines Trapezes bilden. Die Spannachse 4 durchstößt die gebildete Trapezfläche senkrecht, d.h. befindet sich innerhalb des durch die Klemmpunkte aufgespannten Flächenbereichs. Beim Feststellen wird von der Spannachse 4 der trapezförmige Flächenbereich einer bevorzugt aus Stahlblech gefertigten Seitenwange 32, der durch die Sicken 34 und 35 sowie die Vorsprünge 27 und 28 begrenzt wird, nach innen, d.h. jeweils gegen die Seitenfläche 26 gerichtet elastisch eingeformt. Dadurch entsteht eine formschlüssige Verbindung zwischen den Vorsprüngen 27 und 28 der Seitenwangen 32 und den Seitenflächen 26 bezüglich einer Drehung um die Spannachse 4. Folglich ist die Manteleinheit 21 der Stelleinheit 3 in Feststellposition besonders sicher gegen Verdrehung und Verschiebung relativ zur Halteeinheit 3 gesichert, so dass durch relativ geringe Klemmkräfte eine zuverlässige Höhen- und Längspositionierung des Lenkrads erreicht werden kann.

Die Seitenwangen 32 sowie die Manteleinheit 21 mit dem Trägerelement 25 sind bevorzugt aus gestanzten, gebogenen und gefügten Blechteilen gebildet. Dadurch können die Vorsprünge 27, 28, 34 und 35 als in das Blech eingeformte Kanten oder Sicken ausgebildet sein. Alternativ können die Vorsprünge 27, 28, 34 und 35 durch zusätzlich an das Blech angebrachte Bauteile realisiert werden, beispielsweise Schienen oder Profile aus Kunststoff oder aus einem anderen geeigneten Werkstoff, die beispielsweise als Vorsprung 28 formschlüssig in eine Öffnung in der Wandung der Manteleinheit 21 eingerastet werden. Alternativ können anstelle der Sicken 34 und 35 Vorsprünge auf andere Weise von innen an die Seitenwangen 32 angeformt sein, beispielsweise als durch Aufschweißung gebildete Stege oder dergleichen.

Zur Realisierung einer Crasheinrichtung weist das Halteteil 31 Langlöcher 37 auf, die sich parallel zur Längsachse 23 erstrecken, und durch die als Gleitkapsel oder-schuh ausgebildeten Befestigungszapfen 5 hindurchgeführt sind, die eine fest mit der Karosserie verbundene Trageinheit bilden. Die Befestigungszapfen 5 können mittels eines nicht dargestellten Bolzens an einem Querträger der Karosserie festgelegt werden.. Im Crashfall wirkt beim Aufprall des Fahrers auf das Lenkrad eine Kraft in Längsrichtung L nach vorn auf die Stelleinheit 2, die größer ist als die Haftreibungs-Kraft zwischen des Befestigungszapfens 5 und dem Halteteil 31, so dass das Halteteil 31 relativ zur Karosserie und somit relativ zu den Befestigungszapfen 5 nach vorn bewegt wird, wobei jeder Befestigungszapfen 5 in dem jeweiligen Langloch 37 bezüglich der Längsrichtung L nach hinten gleitet.

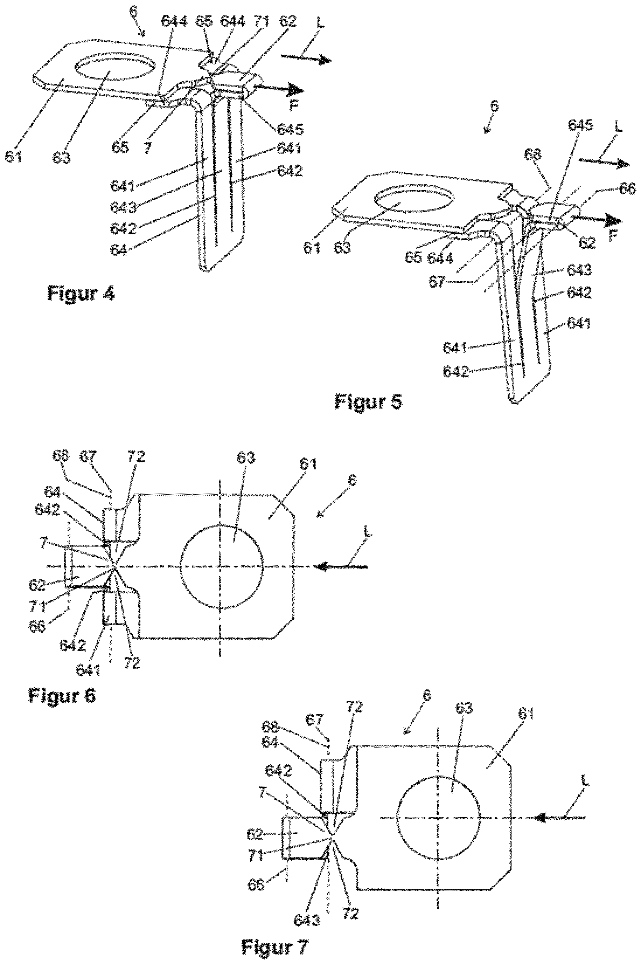

Zwischen dem Befestigungszapfen 5 und der Halteeinheit 3 ist ein erfindungsgemäßes Energieabsorptionselement 6 angebracht, wie es in verschiedenen Ausführungsformen in den Figuren 4 bis 8 dargestellt ist. Das Energieabsorptionselement 6 weist in jeder der beispielhaft dargestellten Ausführungsformen ein erstes Befestigungselement 61 und ein zweites Befestigungselement 62 auf, die bezüglich der Längsrichtung L der Längsachse 23 mit Abstand zueinander angeordnet sind. Mit einer Befestigungsöffnung 63 ist das erste Befestigungselement 61 mit dem karosseriefesten Befestigungszapfen 5 bezüglich einer Belastung parallel zur Längsachse 23 fest verbunden, d.h. der Befestigungszapfen ist durch die Befestigungsöffnung 63 hindurchgeführt. Das zweite Befestigungselement 62 ist mittels einer Klemm- oder Fügeverbindung 38 fest mit dem Halteteil 31 der Halteeinheit 3 verbunden, beispielsweise durch eine Verstemmung, Vernietung oder Verschweissung.

Ein Deformationselement 64 ist mit dem Befestigungselementen 61 und 62 verbunden, so dass eine Relativbewegung der Befestigungselemente 61 und 62 zu einer plastischen Verformung des Deformationselements 64 führt, wie weiter unten noch erläutert wird.

Weiterhin ist erfindungsgemäß ein Sollbruchelement 7 mit dem ersten Befestigungselement 61 und dem zweiten Befestigungselement 62 verbunden, und ist somit bezüglich einer auf die Befestigungselemente 61 und 62 wirkenden Kraft F parallel zum Deformationselement 64 angeordnet.

In der in den Figuren 4, 5 und 6 dargestellten Ausführungsform ist das Deformationselement 64 als Biege-Reißlasche ausgebildet. Dieses umfasst einen plattenförmigen Grundkörper 641, in dem ein durch Soll-Reißlinien 642 begrenzter Biegestreifen einer Biege-Reißlasche, ausgebildet ist, nachfolgend gleichbedeutend kurz Reißlasche 643 genannt. Die Soll-Reißlinien 642 bilden linienförmige Materialschwächungen in dem Grundkörper 641, die beispielsweise durch Einkerbungen gebildet werden.

Der Grundkörper 641 erstreckt sich quer zur Längsachse 23 - in Figuren 4, 5 und 8 nach unten bzw. in Figuren 6 und 7 in die Zeichnungsebene hinein - und ist in einem in Richtung der Längsachse abgewinkelten Abschnitt 644, der entlang einer gestrichelt angedeuteten Biegelinie 68 um etwa 90° umgebogen ist, über eine Fügeverbindung 65, beispielsweise eine Punktschweißung, eine Lötverbindung, eine Nietverbindung oder eine Durchsetzfügeverbindung, fest mit dem ersten Befestigungselement 61 verbunden. Die Reißlasche 643 ist mit ihrem freien Abschnitt 645 ebenfalls in Richtung zur Längsachse 23 abgewinkelt, und fest mit dem zweiten Befestigungselement 62 verbunden. In der dargestellten Ausführung ist dieses zweite Befestigungselement 62 einstückig als Blechumformteil durch eine Umbiegung entlang einer Biegelinie 67 (gestrichelt eingezeichnet) der Reißlasche 643 gebildet. Die Umbiegung beträgt ebenfalls etwa 90°.

Zwischen dem ersten Befestigungselement 61 und dem zweiten Befestigungselement 62 ist das erfindungsgemäße Sollbruchelement 7 angebracht. Dieses ist im dargestellten Beispiel streifenförmig ausgebildet, beispielsweise als Blechstreifen mit einer Breite wie die Reißlasche 643. Das Sollbruchelement 7 weist eine Sollbruchstelle 71 auf, die beispielweise durch einen im Vergleich zum übrigen Verlauf des Sollbruchelements 7 verringerten Materialquerschnitt realisiert wird.

In der dargestellten Ausführung ist das Sollbruchelement 7 einstückig mit dem ersten Befestigungselement 61 ausgebildet, und geht ebenfalls einstückig in das zweite Befestigungselement 62 über.

Weiterhin kann wie dargestellt das Sollbruchelement 7 am freien Ende des zweiten Befestigungselements 62 um eine Biegelinie 66 um 180° umgebogen sein und einstückig in die Reißlasche 643 übergehen. Die relativ zum Befestigungselement 62 um die Biegelinie 67, im gezeigten Beispiel um 90° abgebogene Reißlasche 643 bildet ebenfalls einstückig zusammen mit dem Grundkörper 641 das Deformationselement 64. Der Grundkörper 641 geht nach der Umbiegung um die Biegelinie 68, im dargestellten Beispiel um 90°, in den Abschnitt 644 über, der mit dem ersten Befestigungselement 61 fest verbunden ist, beispielsweise über die als Punktschweißung ausgebildete Fügeverbindung 65. Damit kann ein erfindungsgemäßes Energieabsorptionselement 6 als Biege-/Fügeteil aus einem einstückigen Blechzuschnitt hergestellt werden, was eine verglichen mit dem Stand der Technik besonders rationelle und kostengünstige Produktion ermöglicht.

Figur 4 zeigt das Energieabsorptionselement 6 im unversehrten Originalzustand, bei dem die beiden Befestigungselemente 61 und 62 über das Sollbruchelement 7 miteinander verbunden sind und das parallel dazu angeordnete Deformationselement 64 unverformt ist. Derselbe Zustand ist in Figur 6 dargestellt, wobei die Ansicht parallel zur Höhenrichtung H von oben erfolgt. Daraus ist klar ersichtlich, dass das Sollbruchelement 7 dieselbe Breite hat wie das zweite Befestigungselement 62 und die Reißlasche 643. Darin ist der verringerte Materialquerschnitt der Sollbruchstelle 71 durch zwei V-förmige Aussparungen 72 gebildet, die seitlich in den Verlauf des Sollbruchelements 7 eingebracht sind.

Figur 5 zeigt das Energieabsorptionselement 6 gemäß Figur 4 in ausgelöstem und teilweise deformiertem Zustand nach einem Crashfall. Wie oben beschrieben bewegt sich in einem solchen Crashfall das Halteteil 31parallel zur Längsachse 23 in Längsrichtung L relativ zu dem karosseriefesten Befestigungszapfen 5, auch als Gleitkapsel oder Gleitschuh bezeichnet, nach vorn. Dadurch wird auf das mit dem Halteteil 31 verbundene zweite Befestigungselement 62 relativ zu dem mit dem Befestigungszapfen 5 verbundenen ersten Befestigungselement 61 eine Kraft F, nämlich eine Zugkraft parallel zur Längsachse 23 ausgeübt. Übersteigt die Kraft F einen vorgegebenen Grenzwert, d.h. eine Grenzkraft, die nur im Crashfall auftritt, wenn ein Körper auf das Lenkrad auftrifft, wird das Sollbruchelement 7 so stark auf Zug belastet, dass die Sollbruchstelle 71 reißt, da die Zugfestigkeit des Materials im Sollbruchelement 7 überschritten ist. Erst dann kann das zweite Befestigungselement 62 in Richtung der Kraft F parallel zur Längsachse 23 relativ zum ersten Befestigungselement 61 bewegt werden. Dadurch wird die Reißlasche 643 entlang der Soll-Reißlinien 642 aus dem Grundkörper 641 herausgetrennt, und gleichzeitig von dem Grundkörper 641 abgebogen, wobei der Grundkörper 641 ebenfalls in sich verbogen wird. Durch das Reißen und Verbiegen wird die beim Crash in die Stelleinheit 2 eingetragene Energie kontinuierlich über die Länge der Soll-Reißlinien 642 in Verformungsarbeit umgesetzt, d.h. absorbiert.

Dank der erfindungsgemäßen Integration des Sollbruchelements 7 kann die Reißlasche 643 erst dann herausgetrennt und umgebogen werden, d.h. das Deformationselement 64 aktiviert werden, nachdem das Sollbruchelement 7 durch Überschreiten einer Grenzkraft F gebrochen bzw. gerissen ist. Bei Belastungen unterhalb des Schwellwerts, beispielsweise bei missbräuchlicher Bedienung der Lenkradverstellung, wird das Sollbruchelement 7 nicht zerstört und das Deformationselement 64 kann nicht aktiviert und damit auch nicht beschädigt werden.

Figur 7 zeigt eine alternative Ausführung eines Energieabsorptionselements 6, welches ähnlich aufgebaut ist wie die Ausführung gemäß Figuren 4 bis 6, im Unterschied dazu jedoch eine lediglich einseitig über eine Soll-Reißlinie 642 mi dem Grundkörper 641 verbundene Reißlasche 643 aufweist. Ansonsten ist die Funktionsweise identisch.

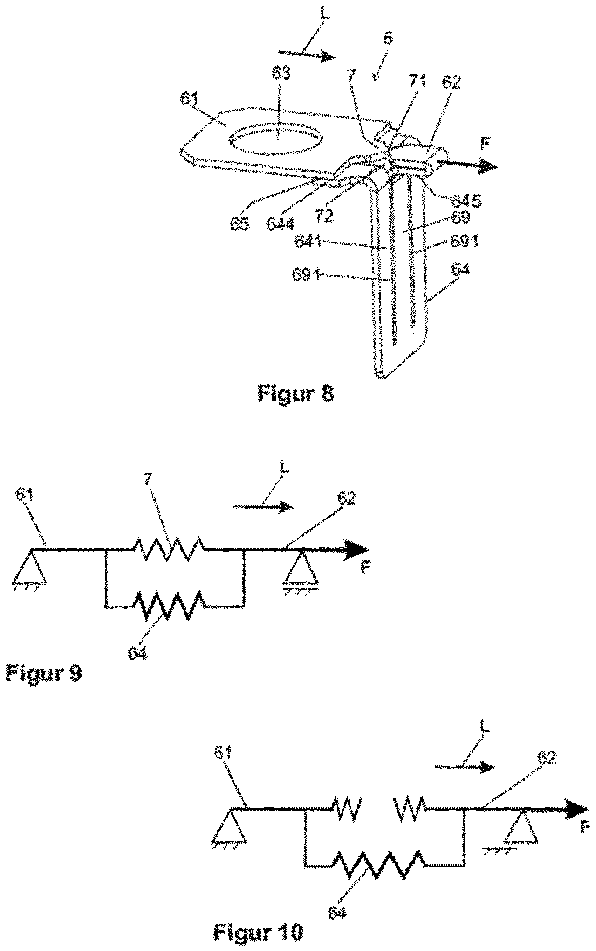

Das Deformationselement 64 der in Figur 8 dargestellten Ausführungsform entspricht im Wesentlichen der in Figur 4 gezeigten Ausführung mit dem Unterschied, dass eine anstelle der Reißlasche 643 ein Biegestreifen in Form einer reinen Biegelasche 69 vorgesehen ist, die entlang der beiden Trennlinien 691, welche Durchbrüche bilden, bereits im Originalzustand von dem Grundkörper 641 getrennt ist, und somit im Crashfall nicht herausgetrennt, sondern lediglich umgebogen wird. Dadurch kann eine abweichende Energieabsorptionscharakteristik realisiert werden.

In den Figuren 9 und 10 ist ein Ersatzschaltbild des erfindungsgemäßen Energieabsorptionselement im Ruhezustand und im ausgelösten Zustand dargestellt, wobei das erste Befestigungselement mit einem Festlager gekoppelt ist und das zweite Befestigungselement mit einem in Längsrichtung verschiebbaren Loslager gekoppelt ist. Das Solbruchelement 7 und das Deformationselement 64 ist jeweils als Feder symbolisiert, wobei diese Federn parallel geschaltet sind. Im Ruhezustand, wie in der Figur 9 dargestellt, erfolgt der Kraftfluss zwischen dem ersten Befestigungselement 61 und dem zweiten Befestigungselement 62 sowohl über das Solbruchelement 7 als auch über das Deformationselement 64, da, wie bereits erläutert, das Solbruchelement 7 und das Deformationselement 64 bzgl. des Kraftflusses parallel zueinander angeordnet sind. Im ausgelösten Zustand, wie in der Figur 10, ist das Sollbruchelement 7 durch das Überschreiten der Grenzkraft gebrochen oder mit anderen Worten aus dem Kraftfluss ausgekoppelt, so dass die Kraft F nur noch auf das Deformationselement 64 wirkt und dadurch die Verlagerung des zweiten Befestigungselements 62 in Längsrichtung L deformiert wird.

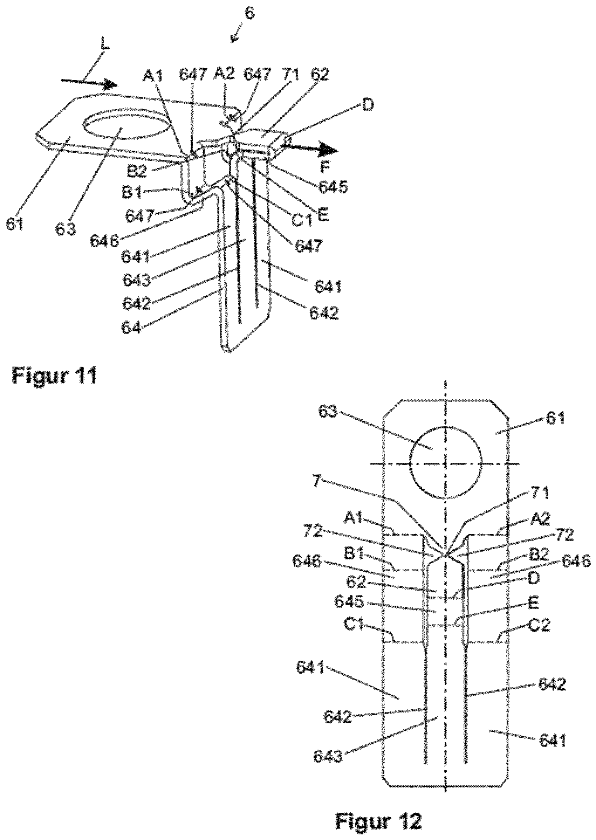

In der Figur 11 ist ein erfindungsgemäßes Energieabsorptionselement 6 in einer dritten Ausführungsform in einer perspektivischen Ansicht dargestellt, wobei dieses Energieabsorptionselement 6 als ein einstückiges integrales Bauteil ausgebildet ist, welches bevorzugt ein einstückiges Stanz-Biege-Bauteil ausgebildet ist. Mit anderen Worten kommt dieses Energieabsorptionselement ohne eine der in den zuvor beschriebenen Ausführungsformen vorhandenen Fügeverbindung aus. Somit kann dieses Energieabsorptionselement durch einen Stanz-Biege-Prozess ohne zusätzliche weitere Operation gefertigt werden. Bevorzugt erfolgt die Fertigung in einem Vier-Stufen-Prozess. Dadurch kann das erfindungsgemäße Energieabsorptionselement 6 besonders wirtschaftlich hergestellt werden. Das erfindungsgemäßes Energieabsorptionselement 6 umfasst einen ersten Befestigungsabschnitt 61 und einen zweiten Befestigungsabschnitt 62, wobei zwischen den Befestigungsabschnitten 61,62 das Sollbruchelement 7 und das Deformationselement 54 angeordnet ist. Zwischen dem ersten Befestigungsabschnitt 61 und dem Grundkörper 641 ist in dieser Ausführungsform keine Fügestelle vorgesehen, da zwischen dem ersten Befestigungsabschnitt 61 und dem Grundkörper 641 ein Ausgleichsabschnitt 646 vorgesehen ist, welcher um die Biegekanten A1, B1, C1 sowie um die Biegekanten A2, B2, C2 umgeformt ist. Um den Ausgleichsabschnitt 646 zu verstärken, kann bevorzugt im Radienbereich des Ausgleichsabschnitt 646 zumindest eine Verstärkungssicke 647 eingebracht sein. Dies erfolgt bevorzugt im letzten Umformschritt, der ebenfalls der Kalibrierung des Energieabsorptionselements 6 dienen kann. Die Verstärkungssicke 647 versteift den Ausgleichsabschnitt 646. Dadurch wird ein ungewolltes Verformen des Ausgleichsabschnitts 646 während des Crash reduziert.

Zur Ausbildung des zweiten Befestigungsabschnitts 62 ist das Material der ursprünglichen Platine um die Biegekante D zurückgebogen und geht somit in den Abschnitt 645 über und mündet weiterhin durch die Umbiegung um die Biegekante E in den Biegestreifen 643. Somit ist es erforderlich, auf Grund der Ausgestaltung des zweiten Befestigungsabschnittes, den Ausgleichsabschnitt 646 zwischen dem ersten Befestigungsabschnitt 61 und dem Grundkörper 641 mit den entsprechenden Biegekanten A1, B1, C1 bzw. den Biegekanten A2, B2, C2 zu versehen, um einen räumlichen Ausgleich zu schaffen, der durch den zurückgebogenen Abschnitt 645 des zweiten Befestigungsabschnitts 62 erforderlich ist. Um dies besser zu verdeutlichen, ist in der Figur 12 das Energieabsorptionselement gemäß Figur 11 in einer Abwicklung dargestellt. Dies entspricht dem Zustand der Platine zwischen den Fertigungsschritten der Stanzoperation und den nachfolgenden Biegeoperationen. Dabei ist gut zu erkennen, dass das erfindungsgemäße Energieabsorptionselement aus einem einstückigen, integralen Blechteil gefertigt werden kann, bei dem keine zusätzlichen Fügeverbindungen erforderlich sind.

Die folgend aufgeführten Fertigungsschritte können zur Darstellung des Energieabsorptionselements entsprechend der dritten Ausführungsform eingesetzt werden:
- Ausstanzen des Rohlings aus einem Blech;
- Einformen eines V-förmigen Abschnitts, bestehend aus zweitem Befestigungselement 62 und dem Abschnitt 645, in eine Werkzeugform, dabei werden die beiden Ausgleichsabschnitte 646, die beidseits des zweiten Befestigungselements 62 angeordnet sind durch eine einfach Werkzeuganlage in die entgegengesetzte Richtung vorgeformt;
- Rechtwinkliges Abkanten des ersten Befestigungsabschnitts 61 zum Deformationselement 64;
- Kalibrieren des Energieabsorptionselements bei Einprägen der endgültigen Form der Ausgleichsabschnitte 646 und des U-Förmigen Abschnitts, bestehend aus zweitem Befestigungselement 62 und dem Abschnitt 645. Dabei können vorzugsweise auch die Verstärkungssicken 647 mit eingeprägt werden.

Grundsätzlich ist es denkbar und möglich, weitere, hier nicht aufgeführte Bauformen von Deformationselementen 64 mit abweichenden Bauformen von Sollbruchelementen 7 in der erfindungsgemäßen Weise zu kombinieren, ohne den Grundgedanken der Erfindung zu verlassen.

**Bezugszeichenliste**

| | | | |
|---|---|---|---|
| 1 | Lenksäule | 61, 62 | Befestigungselement |
| 2 | Stelleinheit | 63 | Befestigungsöffnung |
| 21 | Manteleinheit | 64 | Deformationselement |
| 22 | Lenkspindel | 641 | Grundkörper |
| 23 | Längsachse | 642 | Soll-Reißlinien |
| 24 | Befestigungsabschnitt | 643 | Reißlasche (Biegestreifen) |
| 25 | Trägerelement | 644 | Abschnitt |
| 26 | Seitenfläche | 645 | Abschnitt |
| 27, 28 | Vorsprung | 646 | Ausgleichsabschnitt |
| 3 | Halteeinheit | 647 | Verstärkungssicken |
| 31 | Halteteil | 65 | Fügeverbindung |
| 32 | Seitenwange | 66, 67, 68 | Biegelinie |
| 33 | Langloch | 69 | Biegelasche (Biegestreifen) |
| 34, 35 | Sicke | 691 | Trennlinie |
| 36 | Schnittpunkt | 7 | Sollbruchelement |
| 37 | Langlöcher | 71 | Sollbruchstelle |
| 38 | Fügeverbindung | 72 | Aussparungen |
| 4 | Spannachse | H | Höhenrichtung |
| 5 | Befestigungszapfen | L | Längsrichtung |
| 6 | Energieabsorptionselement | F | Kraft |

## Patentansprüche

1. Energieabsorptionselement (6) für eine Lenksäule (1) eines Kraftfahrzeugs, umfassend mindestens ein Deformationselement (64), ein erstes Befestigungselement (61) und ein zweites Befestigungselement (62), wobei das Deformationselement (64) mit dem ersten Befestigungselement (61) und dem zweiten Befestigungselement (62) verbunden ist und bezüglich einer auf das eine Befestigungselement relativ zu dem anderen Befestigungselement ausübbaren Kraft im Kraftfluss angeordnet ist,
wobei mindestens ein Sollbruchelement (7) parallel im Kraftfluss zum Deformationselement (64) mit dem ersten und dem zweiten Befestigungselement (61 und 62) verbunden ist,
**dadurch gekennzeichnet,**
**dass** das Energieabsorptionselement (6) als einstückiges Formteil ausgebildet ist, wobei das Sollbruchelement (7) ein integraler Bestandteil des Energieabsorptionselements (6) ist.

2. Energieabsorptionselement nach Anspruch 1, **dadurch gekennzeichnet, dass** das Sollbruchelement (7) eine Sollbruchstelle (71) mit im Vergleich zum übrigen Verlauf zwischen den Befestigungselementen (61, 62) verringerter Bruch- oder Reißwiderstandsfähigkeit aufweist.

3. Energieabsorptionselement nach einem der vorangehenden Ansprüche, **dadurch gekennzeichnet, dass** das erste und zweite Befestigungselement (61 und 62) in einer Längsrichtung (L) mit Abstand zueinander angeordnet sind, wobei das Deformationselement (64) und das Sollbruchelement (7) bezüglich dieser Längsrichtung (L) zwischen dem ersten und zweiten Befestigungselement (61 und 62) angeordnet sind.

4. Energieabsorptionselement nach einem der vorangehenden Ansprüche, **dadurch gekennzeichnet, dass** das Deformationselement (64) über einen vorgegebenen Deformationsweg kontinuierlich fortschreitend verformbar ist.

5. Energieabsorptionselement nach einem der vorangehenden Ansprüche, **dadurch gekennzeichnet, dass** das Deformationselement (64) ein Biegeelement und/oder eine Reißlasche und/oder eine Biege-Reißlasche aufweist.

6. Energieabsorptionselement nach Anspruch 5, **dadurch gekennzeichnet, dass** das Deformationselement (64) einen Grundkörper (641) aufweist, der an dem ersten Befestigungselement (61) angebracht ist, und einen an dem Grundkörper (641) ausgebildeten Biegestreifen (643, 69), der mit dem zweiten Befestigungselement (62) verbunden ist.

7. Energieabsorptionselement nach Anspruch 6, **dadurch gekennzeichnet, dass** das zweite Befestigungselement an dem Biegestreifen (643, 69) ausgebildet ist und der Biegestreifen (643, 69) über das zweite Befestigungselement (62) hinaus weitergeführt ist als Sollbruchelement (7) bis zum ersten Befestigungselement (61).

8. Lenksäule für ein Kraftfahrzeug, umfassend eine Trageinheit, die mit einer Karosserie eines Kraftfahrzeugs verbindbar ist, einer Halteeinheit, die eine Stelleinheit mit einer darin drehbar gelagerten Lenkspindel trägt und die in einer Längsrichtung verschiebbar von der Trageinheit gehalten wird, wobei ein Energieabsorptionselement ein Deformationselement aufweist, welches mit jeweils einem Befestigungselement mit der Trageinheit und der Halteeinheit verbunden ist, und welches bei einer Relativverschiebung von Trageinheit und Halteeinheit im Crashfall unter Energieaufnahme deformiert wird, wobei das Energieabsorptionselement (6) mindestens ein Sollbruchelement (7) aufweist, welches zwischen den Befestigungselementen (61, 62) befestigt ist,
**dadurch gekennzeichnet,**
**dass** das Energieabsorptionselement (6) als einstückiges Formteil ausgebildet ist.

9. Lenksäule nach Anspruch 8, **dadurch gekennzeichnet, dass** das Sollbruchelement (7) nach einem der Ansprüche 1 bis 7 ausgebildet ist.

## Claims

1. Energy absorption element (6) for a steering column (1) of a motor vehicle, comprising at least one deformation element (64), a first fastening element (61) and a second fastening element (62), wherein the deformation element (64) is connected to the first fastening element (61) and to the second fastening element (62) and is arranged in the force flux with respect to a force which can be exerted on the one fastening element relative to the other fastening element,
wherein at least one predetermined breaking element (7) is connected to the first and to the second fastening element (61 and 62) parallel to the deformation element (64) in the force flux,
**characterized in that**
the energy absorption element (6) is designed as a single-piece shaped part, wherein the predetermined breaking element (7) is an integral component of the energy absorption element (6).

2. Energy absorption element according to Claim 1, **characterized in that** the predetermined breaking element (7) comprises a predetermined breaking point (71) with a reduced breaking or tearing resistance in comparison to the remaining extent between the fastening elements (61, 62).

3. Energy absorption element according to either of the preceding claims, **characterized in that** the first and second fastening element (61 and 62) are arranged at a distance from each other in a longitudinal direction (L), wherein the deformation element (64) and the predetermined breaking element (7) are arranged between the first and second fastening element (61 and 62) with respect to said longitudinal direction (L).

4. Energy absorption element according to one of the preceding claims, **characterized in that** the deformation element (64) is deformable in a continuously progressing manner over a predetermined deformation distance.

5. Energy absorption element according to one of the preceding claims, **characterized in that** the deformation element (64) comprises a bending element and/or a tearing tab and/or a bending and tearing tab.

6. Energy absorption element according to Claim 5, **characterized in that** the deformation element (64) comprises a basic body (641) which is attached to the first fastening element (61), and a bending strip (643, 69) which is formed on the basic body (641) and is connected to the second fastening element (62).

7. Energy absorption element according to Claim 6, **characterized in that** the second fastening element is formed on the bending strip (643, 69), and the bending strip (643, 69) is guided further beyond the second fastening element (62) than the predetermined breaking element (7) as far as the first fastening element (61).

8. Steering column for a motor vehicle, comprising a supporting unit which is connectable to a body of a motor vehicle, and a holding unit which supports an adjusting unit with a steering spindle mounted rotatably therein and which is held by the supporting unit so as to be displaceable in a longitudinal direction, wherein an energy absorption element comprises a deformation element which is connected to the supporting unit and to the holding unit by one fastening element in each case and which, during a relative displacement of supporting unit and holding unit in the event of a crash, is deformed, absorbing energy, wherein the energy absorption element (6) comprises at least one predetermined breaking element (7) which is fastened between the fastening elements (61, 62),
**characterized in that**
the energy absorption element (6) is designed as a single-piece shaped part.

9. Steering column according to Claim 8, **characterized in that** the predetermined breaking element (7) is designed according to one of Claims 1 to 7.

## Revendications

1. Élément d'absorption d'énergie (6) destiné à une colonne de direction (1) d'un véhicule automobile et comprenant au moins un élément de déformation (64), un premier élément de fixation (61) et un deuxième élément de fixation (62), l'élément de déformation (64) étant relié au premier élément de fixation (61) et au deuxième élément de fixation (62) et étant disposé dans le flux de force par rapport à une force pouvant être exercée sur l'un des éléments de fixation par rapport à l'autre élément de fixation, au moins un élément de rupture (7) étant relié, parallèle à l'élément de déformation (64) dans le flux de force, aux premier et deuxième éléments de fixation (61 et 62),
**caractérisé en ce que**
l'élément d'absorption d'énergie (6) est conçu comme un élément moulé d'une seule pièce, l'élément de rupture (7) faisant partie intégrante de l'élément d'absorption d'énergie (6).

2. Élément d'absorption d'énergie selon la revendication 1, **caractérisé en ce que** l'élément de rupture (7) comporte un point de rupture (71) présentant une résistance à la rupture ou à la déchirure réduite par rapport à la partie restante entre les éléments de fixation (61, 62).

3. Élément d'absorption d'énergie selon l'une des revendications précédentes, **caractérisé en ce que** les premier et deuxième éléments de fixation (61 et 62) sont disposés à distance l'un de l'autre dans une direction longitudinale (L), l'élément de déformation (64) et l'élément de rupture (7) étant disposés entre les premier et deuxième éléments de fixation (61 et 62) par rapport à cette direction longitudinale (L).

4. Élément d'absorption d'énergie selon l'une des revendications précédentes, **caractérisé en ce que** l'élément de déformation (64) est déformable de manière continue et progressive sur un trajet de déformation prédéterminé.

5. Élément d'absorption d'énergie selon l'une des revendications précédentes, **caractérisé en ce que** l'élément de déformation (64) comporte un élément flexible et/ou une languette déchirable et/ou une languette flexible et déchirable.

6. Élément d'absorption d'énergie selon la revendication 5, **caractérisé en ce que** l'élément de déformation (64) comporte un corps de base (641) qui est fixé au premier élément de fixation (61) et une bande flexible (643, 69) formée au niveau du corps de base (641) et reliée au deuxième élément de fixation (62) .

7. Élément d'absorption d'énergie selon la revendication 6, **caractérisé en ce que** le deuxième élément de fixation est formé au niveau de la bande flexible (643, 69) et la bande flexible (643, 69) est guidée au-delà du deuxième élément de fixation (62) en tant qu'élément de rupture (7) jusqu'au premier élément de fixation (61).

8. Colonne de direction destinée à un véhicule automobile et comprenant une unité de support pouvant être reliée à une carrosserie d'un véhicule automobile, une unité de retenue portant une unité de réglage dans laquelle une broche de direction est montée à rotation et pouvant être maintenue de l'unité de support de manière à pouvoir coulisser dans une direction longitudinale, un élément d'absorption d'énergie comportant un élément de déformation qui est relié, par un élément de fixation respectif, à l'unité de support et à l'unité de retenue, et qui est déformé avec absorption d'énergie lors d'un coulissement relatif de l'unité de support et de l'unité de retenue en cas de collision, l'élément d'absorption d'énergie (6) comportant au moins un élément de rupture (7) fixé entre les éléments de fixation (61, 62),
**caractérisé en ce que**
l'élément d'absorption d'énergie (6) est conçu comme un élément moulé d'une seule pièce.

9. Colonne de direction selon la revendication 8, **caractérisée en ce que** l'élément de rupture (7) est conçu selon l'une des revendications 1 à 7.
